(19) Europäisches Patentamt
European Patent Office
Office européen des brevets

(11) **EP 1 729 872 B1**

(12) **EUROPEAN PATENT SPECIFICATION**

(45) Date of publication and mention
of the grant of the patent:
**10.03.2021 Bulletin 2021/10**

(21) Application number: **05716318.0**

(22) Date of filing: **23.03.2005**

(51) Int Cl.:
*B01D 53/94* (2006.01)    *B01J 23/58* (2006.01)
*B01J 23/63* (2006.01)    *B01J 21/00* (2006.01)

(86) International application number:
**PCT/EP2005/003080**

(87) International publication number:
**WO 2005/092481 (06.10.2005 Gazette 2005/40)**

(54) **NITROGEN OXIDE STORAGE CATALYST**

STICKSTOFFOXIDSPEICHERKATALYSATOR

CATALYSEUR D'ACCUMULATION DES OXYDES D'AZOTE

(84) Designated Contracting States:
**AT BE BG CH CY CZ DE DK EE ES FI FR GB GR HU IE IS IT LI LT LU MC NL PL PT RO SE SI SK TR**

(30) Priority: **27.03.2004 DE 102004015116**

(43) Date of publication of application:
**13.12.2006 Bulletin 2006/50**

(73) Proprietor: **Umicore AG & Co. KG**
**63457 Hanau-Wolfgang (DE)**

(72) Inventors:
• **KLUGE, Juliane**
**80807 München (DE)**
• **GOEBEL, Ulrich**
**65795 Hattersheim (DE)**

• **WITTROCK, Meike**
**63599 Biebergemünd (DE)**
• **KÖGEL, Markus**
**63500 Seligenstadt (DE)**
• **KREUZER, Thomas**
**61184 Karben (DE)**

(56) References cited:
**EP-A- 0 945 165    EP-A- 1 016 448**
**EP-A- 1 316 354    EP-A- 1 317 953**
**US-A- 4 883 783**

Remarks:
The file contains technical information submitted after the application was filed and not included in this specification

EP 1 729 872 B1

**Description**

The invention relates to a storage material for nitrogen oxides and a nitrogen oxide storage catalyst for reducing the concentration of nitrogen oxides in the exhaust gas of lean-burn engines which is produced therefrom.

Nitrogen oxide storage catalysts of various compositions are known from the patent literature, for example from the European first publication EP 1 317 953 A1 (corresponds to US 6,858,193 B2) of the applicant.

The nitrogen oxide storage catalyst of EP 1 317 953 A1 comprises an oxidation-active component, for example platinum, on a support material and nitrogen oxide storage components based on oxides, carbonates or hydroxides of elements selected from the group consisting of magnesium, calcium, strontium, barium, the alkali metals, the rare earth metals and mixtures thereof. According to EP 1 317 953 A1, a cerium-zirconium mixed oxide is used as support material for the nitrogen oxide storage components. The excellent properties of the nitrogen oxide storage catalyst in terms of the width of the temperature window, the storage efficiency and the ageing stability are based mainly on the support material comprising a homogeneous magnesium-aluminium mixed oxide having a magnesium oxide content of from 1 to 40% by weight, based on the total weight of the Mg-Al mixed oxide, which is used for the platinum. A further advantageous variant of the storage catalyst is obtained according to EP 1 317 953 A1 when the platinum-catalysed Mg-Al mixed oxide is additionally doped with cerium oxide or praseodymium oxide by impregnation.

DE 198 13 655 A1 (corresponds to US 6,338,831 B1) of the applicant discloses a storage material for sulphur oxides which comprises a magnesium-aluminium mixed oxide ($MgO \cdot Al_2O_3$), with the storage material having a molar ratio of magnesium oxide to aluminium oxide of more than 1.1:1 and the magnesium oxide, which is present in a stoichiometric excess, being homogeneously distributed in finely divided form in the storage material.

The increasing demands made of pollutant conversion and the durability of the catalysts and also the economically motivated desire for a reduction in the noble metal content while maintaining the same catalyst performance make continual further development of the catalysts necessary. It was therefore an object of the present invention to provide, on the basis of EP 1 317 953 A1, an improved nitrogen oxide storage material and a nitrogen oxide storage catalyst which is produced using this material and displays further-improved pollutant conversion and/or reduced use of noble metal. With regard to the technical background to the invention and the prior art, reference may be made to the patent application cited.

Before going into a detailed description of the invention, some terms which are of importance to the invention will be defined in the following:

For the purposes of the invention, a mixed oxide is an oxidic, solid powder material which consists of at least two components which form a mixture on an atomic level. This term excludes physical mixtures of oxidic powder materials. An important component of the catalyst of the invention is a homogeneous mixed oxide of magnesium oxide and aluminium oxide. This will be referred to as Mg-Al mixed oxide for the purposes of the present invention. Its composition is, within measurement accuracy, constant, i.e. homogeneous, over the cross section of a powder particle.

A distinction is made in the following between a nitrogen oxide storage material and the nitrogen oxide storage components. Nitrogen oxide storage components are, for example, the oxides, carbonates or hydroxides of magnesium, calcium, strontium, barium, the alkali metals, the rare earth metals or mixtures thereof which, owing to their basic properties, are able to react with acidic nitrogen oxides of the exhaust gas to form nitrates and store them in this way. A nitrogen oxide storage material comprises the storage components which have been deposited in very finely divided form on suitable support materials to produce a large interaction area with the exhaust gas.

Further important components of catalysts are oxygen-storing materials such as materials based on cerium oxide. Due to its ability to change its oxidation state from +3 to +4 and vice versa, cerium oxide is able to store oxygen in lean-burn exhaust gas (excess of oxygen) and release oxygen again in rich-burn exhaust gas (deficiency of oxygen).

It has now been found that the performance of the nitrogen oxide storage catalyst of EP 1 317 953 A1 can be improved further when the homogeneous Mg-Al mixed oxide doped with cerium oxide and/or praseodymium oxide is used as support material not only for the oxidation-active component platinum but also for the nitrogen oxide storage components.

The invention therefore provides an improved nitrogen oxide storage material and a nitrogen oxide storage catalyst produced using this storage material.

The nitrogen oxide storage material of the invention contains platinum as oxidation-active component and a nitrogen oxide storage material, comprising oxides, carbonates or hydroxides of barium on a homogeneous magnesium-aluminum mixed oxide doped with rare earth oxides as support material, with the magnesium-aluminum mixed oxide containing from 1 to 30% by weight of magnesium oxide, based on the total weight of the magnesium-aluminum mixed oxide and a homogeneous magnesium-aluminum mixed oxide doped with rare earth oxides likewise serves as support material for platinum, provided that if platinum is applied together with the storage component to the support material, an additional oxygen-storage component based on cerium is added to the storage catalyst.

The homogeneous Mg-Al mixed oxide preferably contains from 5 to < 28% by weight, in particular from 10 to 25% by weight, of magnesium oxide, based on the total weight of the Mg-Al mixed oxide. The magnesium oxide of the storage material is therefore present entirely as homogeneous magnesium-aluminium mixed oxide, while free aluminium oxide is present in excess.

Suitable rare earth oxides for the storage material of the invention include the oxides of rare earth metals selected from the group consisting of cerium, praseodymium, neodymium, lanthanum, samarium and mixtures thereof, in particular cerium oxide and/or praseodymium oxide and especially cerium oxide. The concentration of the rare earth oxides in the storage material is preferably from 5 to 15% by weight, based on the total weight of the support material.

The nitrogen oxide storage catalyst of the invention comprises platinum as oxidation-active component and the storage material described, with a homogeneous Mg-Al mixed oxide doped with rare earth oxides likewise serving as support material for platinum.

A second, advantageous embodiment of the invention is obtained when platinum is applied to the nitrogen oxide storage material itself and the catalyst additionally contains an oxygen-storing material based on cerium oxide.

The magnesium oxide present in the Mg-Al mixed oxide is, owing to its basic properties, itself suitable as storage component for nitrogen oxides. However, the inventors' studies on the storage of nitrogen oxides by means of the homogeneous Mg-Al mixed oxide showed an unsatisfactory storage action. Only when the Mg-Al oxide was used as support material for components based on barium oxide, was a significant improvement in the still-to-be-defined $NO_x$ storage efficiency surprisingly observed.

It has been found to be important for magnesium oxide and aluminium oxide to form a homogeneous mixed oxide in order to obtain a suitable support material. In such a mixed oxide made up of magnesium oxide and $\gamma$-aluminium oxide, the magnesium ions occupy part of the lattice sites of aluminium ions. This mixed oxide has a good thermal stability. However, the thermal stability is only optimal when care is taken to ensure that the magnesium oxide is distributed very homogeneously over the entire particle of the mixed oxide. Introduction of the magnesium oxide only into the surface of the particle of an aluminium oxide does not lead to the desired thermal stability.

Such a material is preferably prepared by the sol-gel process. Such a process is described, for example, in US 6,217,837 B1. The process described in DE 195 03 522 A1 using alkoxide mixtures and subsequent hydrolysis with water is likewise suitable.

Post-formation impregnation of aluminium oxide with soluble precursor compounds of magnesium oxide and calcination to convert the precursor compound into magnesium oxide does not lead to homogeneous Mg-Al mixed oxides at customary calcination temperatures. If an attempt is made to force the formation of homogeneous Mg-Al mixed oxides by increasing the calcination temperatures, low-surface-area mixed oxides which have little suitability for catalytic applications are obtained.

The homogeneous Mg-Al mixed oxide, on the other hand, has a specific surface area of more than 40 $m^2/g$, in particular from 100 to 200 $m^2/g$. Particular preference is given to Mg-Al mixed oxides having a specific surface area of from 130 to 170 $m^2/g$.

According to the invention, the support material for the nitrogen oxide storage components and for the oxidation-active components is obtained by doping the homogeneous Mg-Al mixed oxide with rare earth oxides. For the purposes of the present invention, "doping" means the uniform coating of the specific surface area of the Mg-Al mixed oxide with a further oxide. This can be achieved, for example, by impregnating the Mg-Al mixed oxide with precursor compounds of the desired rare earth oxides and drying and calcining the impregnated material. The calcination is preferably carried out at a temperature of from 400 to 600°C for a time of from 1 to 5 hours. Good results have been obtained using a temperature of 500°C and a time of 2 hours.

Suitable precursor compounds of the rare earth oxides for doping the Mg-Al mixed oxide are, for example, the nitrates and acetates of the rare earth metals.

To produce the nitrogen oxide storage material, the storage components are applied to the support material. This is once again preferably effected by impregnating the support material with precursor compounds of the storage components. Drying and calcining the impregnated support material gives the finished storage material. Drying and calcination conditions can be the same as those in the doping of the Mg-Al mixed oxide with the rare earth oxides.

To form a storage catalyst, the storage material is combined with an oxidation-active component, in particular platinum, with the Mg-Al mixed oxide doped with rare earth oxides likewise being used as support material for platinum. The use of the support material according to the invention both for the storage components and for the oxidation-active components results in a significant improvement in the catalytic activity of the nitrogen oxide storage catalyst after ageing compared to the catalyst described in the first publication EP 1 317 953 A1 in which only platinum was supported on an Mg/Al mixed oxide doped with cerium oxide.

The homogeneous magnesium-aluminium mixed oxide which is doped with rare earth oxides and serves as support material for platinum preferably contains from 1 to 30% by weight, particularly preferably from 5 to < 28% by weight and in particular from 10 to 25% by weight, of magnesium oxide, based on the total weight of the magnesium-aluminium mixed oxide. The amount of rare earth oxides present as dopants is preferably from 5 to 15% by weight, based on the total weight of the support material.

A distinction may be made between two major embodiments of the storage catalyst. In the first embodiment, platinum and the storage component are deposited on different portions of the support material, i.e. to different portions of the Mg/Al mixed oxide doped with rare earth oxides. In the second embodiment, platinum is applied together with the storage component to the support material. In this second case, it has been found to be necessary to add an additional oxygen-storing component based on cerium oxide, in particular a cerium-zirconium mixed oxide (Ce-Zr mixed oxide), to the storage catalyst.

To improve the regeneration behaviour of the storage catalyst, palladium can be additionally applied to the oxidation-active component consisting of platinum. To achieve very complete conversion of the nitrogen oxides desorbed during regeneration of the storage catalyst, it is advantageous to add a further support material onto which rhodium has been deposited to the catalyst. A suitable support material for rhodium is an active, optionally stabilized aluminium oxide. Preference is given to using an aluminium oxide stabilized with from 1 to 10% by weight of lanthanum oxide for these purposes.

The catalyst of the invention is particularly suitable for the purification of exhaust gases from lean-burn engines, i.e. from petrol engines operated under lean conditions and from diesel engines.

The invention is illustrated by the following examples and figures. The figures show:

**Figure 1:**   Determination of the $NO_x$ storage efficiency

**Figure 2:**   $NO_x$ storage efficiency for various catalyst formulations in the fresh state

**Figure 3:**   $NO_x$ storage efficiency for various catalyst formulations after furnace ageing

**Figure 4:**   $NO_x$ storage efficiency for barium oxide on various support materials

**Figure 5:**   $NO_x$ storage efficiency for various catalyst formulations after furnace ageing

### Determination of the $NO_x$ storage efficiency

In the following examples and comparative examples, complete catalysts are produced and their storage efficiency for nitrogen oxides is determined as a function of the exhaust gas temperature. The storage efficiency of a catalyst is the most important parameter for assessing its performance. It describes the efficiency in respect of the removal of nitrogen oxides from the exhaust gas from lean-burn engines.

The $NO_x$ storage efficiency of the catalysts was determined on a model gas unit. For this purpose, the storage catalysts were subjected to a rich/lean cycle, i.e. lean-burn exhaust gas and rich-burn exhaust gas were passed alternately through the catalysts at a defined temperature. Lean-burn exhaust gas compositions were obtained by introducing oxygen while simultaneously interrupting the introduction of carbon monoxide and hydrogen. Rich-burn exhaust gas compositions were produced by the reverse procedure.

During the lean phase, the nitrogen oxides were stored by the respective catalyst. During the rich phases, the nitrogen oxides were desorbed again and reacted over the catalyst with the reductive components carbon monoxide, hydrogen and hydrocarbons of the model exhaust gas to form nitrogen, carbon dioxide and water.

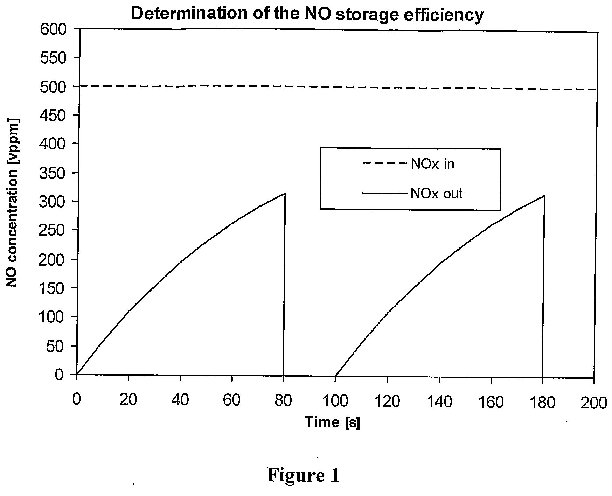

Figure 1 shows these circumstances in an idealized manner. During the measurements, the exhaust gas had a constant concentration of 500 vppm (ppm by volume) of nitrogen monoxide (NO). The nitrogen oxide concentration entering the storage catalyst ($NO_x$ in) is therefore indicated by the broken line in Figure 1. The nitrogen oxide concentration downstream of the storage catalyst ($NO_x$ out) is initially zero, since in the ideal case the fresh storage catalyst binds all nitrogen oxides present in the exhaust gas. As time goes on, the storage catalyst becomes laden with nitrogen oxides and its storage capacity decreases. As a result, decreasing amounts of nitrogen oxides are bound on the storage catalyst, so that a rising nitrogen oxide concentration becomes measurable downstream of the catalyst; after the storage catalyst has become completely saturated with nitrogen oxides, this increased nitrogen oxide concentration will approximate the inlet concentration. The regeneration of the storage catalyst therefore has to be commenced after a particular time (in Figure 1, after 80 seconds). This is achieved by making the exhaust gas rich for a time of about 10 seconds. This results in the stored nitrogen oxides being desorbed and, in the ideal case, being completely converted over the storage catalyst, so that no nitrogen oxides are measurable downstream of the storage catalyst during the regeneration time. The test apparatus is then switched back over to lean-burn exhaust gas and the storage of nitrogen oxides begins afresh.

The instantaneous storage efficiency of the storage catalyst is defined as the ratio

$$\frac{NO_x \text{ in} - NO_x \text{ out}}{NO_x \text{ in}}.$$

As can be seen from Figure 1, this efficiency is time-dependent. To assess the storage catalysts, the storage efficiency S integrated over the respective storage phase and averaged over eight successive storage cycles was therefore determined:

$$S = \frac{1}{8} \sum_{1}^{8} \int_{t=0}^{80} \frac{NO_x \; in - NO_x \; out}{NO_x \; in} dt \times 100 \, [\%] \, .$$

The storage efficiency S is thus not a material constant but is dependent on the parameters of the chosen rich/lean cycle. To assess the storage catalysts produced, the following conditions were selected:

**Table 1: Exhaust gas composition**

| Gas component | Concentration | |
|---|---|---|
| | during the lean phase | during the rich phase |
| CO | 0.0% by volume | 4% by volume |
| $H_2$ | 0.0% by volume | 1.3% by volume |
| $O_2$ | 8.0% by volume | 0% by volume |
| $C_3H_s$ | 17 vppm | |
| $C_3H_6$ | 33 vppm | |
| NO | 500 vppm | |
| $CO_2$ | 10.0 % by volume | |
| $H_2O$ | 10.0 % by volume | |
| $N_2$ | balance | |

**Table 2: Process parameters for the rich/lean cycle**

| Parameter | during the lean phase | during the rich phase |
|---|---|---|
| GHSV | $50\,000 \; h^{-1}$ | |
| T | 600 - 150°C in steps of 80°C | |
| λ | 1.5 | 0.88 |
| Time | 80 s | 10 s |

The catalyst formulations studied in the following examples consist of various components. These components were processed to produce an aqueous coating suspension with which cordierite honeycombs having a cell density of $62 \; cm^{-2}$ (number of flow channels in the honeycombs per unit cross-sectional area) were coated by dipping. The coated honeycombs were dried and subsequently calcined in air at 500°C for 2 hours.

The nitrogen oxide storage efficiency of the coated honeycombs was determined as described above in the fresh state and after ageing in a model gas unit. For the purpose of ageing, the catalysts were stored in air at a temperature of 850°C for 24 hours. Before a measurement, the catalysts were firstly heated to 600°C under the model exhaust gas conditions. The exhaust gas temperature was then reduced to 150°C in steps of 80°C. The $NO_x$ storage efficiency was determined for each temperature step.

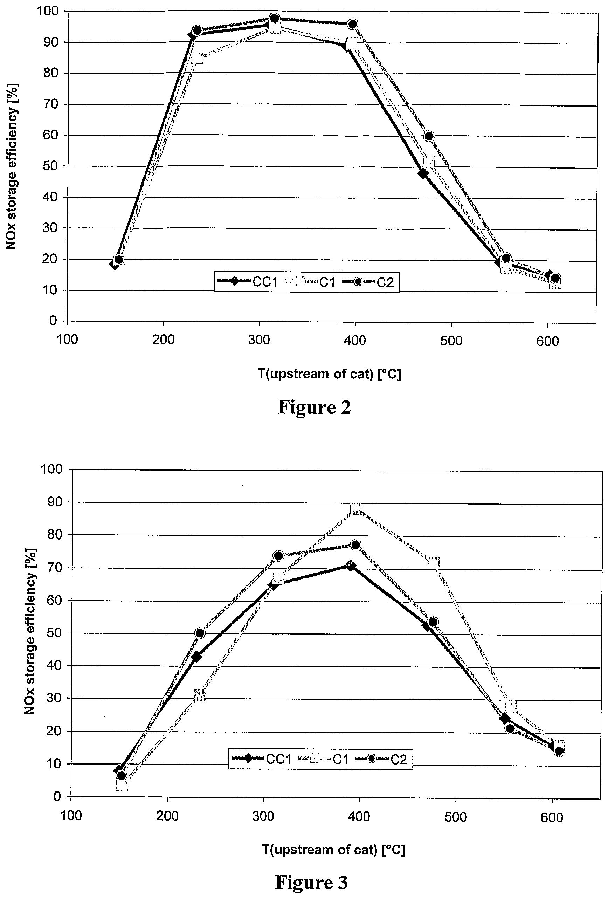

In Figures 2 to 5, the storage efficiencies determined in this way for various storage catalysts are plotted as a function of the exhaust gas temperature. Table 3 shows the composition of the coatings of the catalysts studied. Column 1 shows the coating components of which the catalysts are composed. The coating components comprise the respective support material and the catalytically active components deposited thereon. The concentrations of support material and catalytically active components based on the volume of the catalyst bodies are given in columns 2 to 6.

The entries in the first column have the following meanings:

| 1. Mg-Al oxide: | homogeneous magnesium-aluminium mixed oxide having a weight ratio of the oxidic components $Al_2O_3$ : MgO = 80 : 20 |
| 2. $CeO_2$/Mg-Al oxide: | magnesium-aluminium mixed oxide doped with $CeO_2$ |
| 3. Pt/$CeO_2$/Mg-Al oxide: | Platinum supported on 2. |
| 4. Pd[Pt/$CeO_2$/Mg-Al oxide]: | Palladium deposited on 3. |
| 5. Ce-Zr oxide: | Cerium-zirconium mixed oxide (90/10) |
| 6. Rh/Al oxide: | Rhodium supported on aluminium oxide |

In some examples, the catalytically active components were applied simultaneously by impregnation to two support oxides. In these cases, only the total concentration of the catalytically active component (for example platinum or barium oxide) on the two materials is shown in Table 3. The preparation of the mixed oxide powder Mg-Al oxide has been described in detail in EP 1 317 953 A1.

**Example 1:** (Catalyst C1)

A storage catalyst according to Claim 1 was produced. For this purpose, the Mg-Al mixed oxide was firstly doped with cerium oxide by impregnation with cerium nitrate and subsequent calcination. In the doped support material, the oxidic components were present in the following weight ratios:

$Al_2O_3$ : MgO : $CeO_2$ = 72 : 18 : 10

The finished material had a BET surface area of 105 $m^2$/g. 102.8 g of this material were impregnated with an aqueous solution of hexahydroxoplatinic acid ($H_2Pt(OH)_6$) dissolved in ethanolamine, dried and calcined in air at 500°C, so that the material contained 3.18 g of platinum.

To produce the storage material, 126.3 g of the same material were impregnated with barium acetate and subsequently calcined (500°C; 2 hours). The finished storage material contained 25.3 g of barium, calculated as oxide.

The two powder materials were suspended in water. The suspension was milled to a particle size of 3-5 $\mu$m ($d_{50}$) and applied by means of a dipping process to a commercial cordierite honeycomb having 62 cells per square centimetre. The honeycomb which had been coated in this way was dried at 120°C in a drying oven. The coated honeycomb was subsequently calcined at 500°C for 2 hours.

**Example 2:** (Catalyst C2)

To produce catalyst C2 according to Claim 1, the Mg-Al oxide doped with cerium oxide was firstly impregnated with barium acetate, dried and calcined and platinum was subsequently applied to it as described in Example 1. In addition, a cerium-zirconium mixed oxide was added to the catalyst.

**Comparative Example 1:** (Comparative catalyst CC1)

As comparative catalyst, a catalyst was produced as described in EP 1 317 953 A1. It differed from the two catalysts C1 and C2 according to the invention in that the storage component barium oxide was not deposited on the Mg-Al oxide doped with cerium oxide but on a cerium-zirconium mixed oxide.

Figures 2 and 3 show the measurements of the storage efficiency as a function of the exhaust gas temperature upstream of the catalyst for the catalysts C1, C2 and CC1 in the fresh state (Figure 2) and after ageing (Figure 3).

Catalyst C2 has the broadest working range. C1 is somewhat better than the comparative catalyst at high exhaust gas temperatures. However, at low exhaust gas temperatures, this catalyst has disadvantages compared to the comparative catalyst. After ageing, catalyst C2 is still better than the comparative catalyst over the entire working range. Catalyst C1 after ageing displays significantly higher efficiencies at high temperatures than the comparative catalyst and even than catalyst C2.

The results demonstrate the positive effect of the nitrogen oxide storage material of the invention on the catalytic activity and ageing stability of the storage catalysts.

**Example 3; Comparative Examples 2 and 3** (Catalysts C3, CC2 and CC3)

This series of experiments shows that the improvements in the catalytic behaviour determined for C1 and C2 are closely associated with the doping of the Mg-Al oxide with cerium oxide.

Catalyst C3 was produced in a manner similar to catalyst C1. To improve its regeneration behaviour, the oxidation-active coating component to which platinum had been applied was additionally impregnated with palladium and, in addition, a rhodium-doped aluminium oxide was added to the catalyst composition.

To produce the rhodium-doped aluminium oxide, an aluminium oxide stabilized with 3% by weight of lanthanum (BET surface area: 202 $m^2$/g) was impregnated with a rhodium nitrate solution, dried and calcined in air at 500°C.

To obtain the comparative catalysts, the support material used for barium oxide in the case of the catalyst C1 was replaced in the case of comparative catalyst CC2 by a physical mixture of the homogeneous Mg-Al mixed oxide and a cerium-zirconium mixed oxide and in the case of comparative catalyst CC3 by a physical mixture of the Mg-Al mixed oxide and cerium oxide. Comparative catalyst CC3 had the same elemental composition as catalyst C3. The difference between the two catalysts was merely in the relative arrangement of the oxidic materials (doping of the Mg-Al mixed oxide with cerium oxide in the case of C1 and physical mixing of the Mg-Al mixed oxide with cerium oxide in the case of CC3).

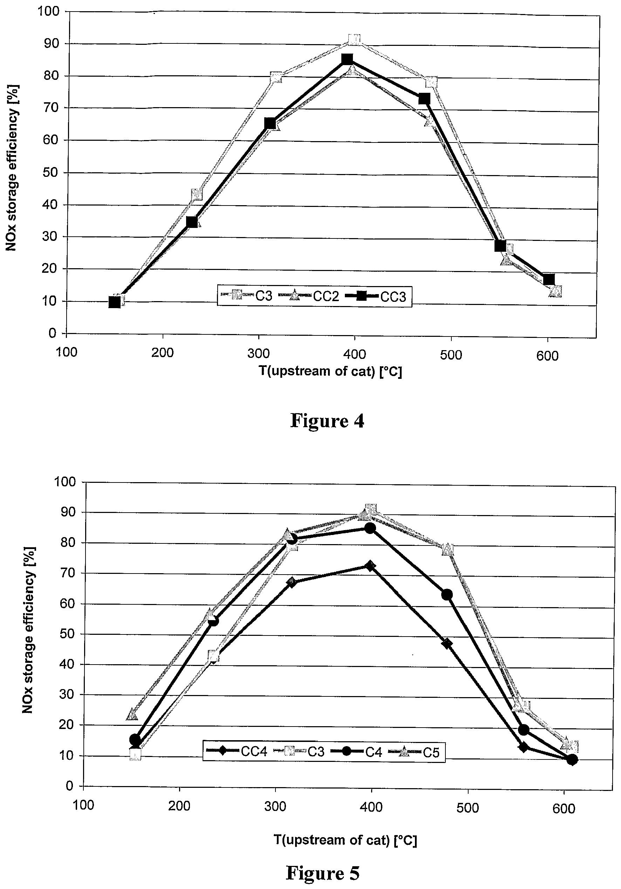

The measurement results on the storage efficiency of these catalysts (cf. Figure 4) show that catalyst C3 (Mg-Al mixed oxide doped with cerium oxide as support material for barium oxide) displays significantly better catalytic properties than the comparative catalysts CC2 and CC3 which use physical mixtures as support material for barium oxide.

## Examples 3 to 5 and Comparative Example 4 (catalysts C3 to C5 and CC4)

Comparative catalyst CC4 corresponds in terms of its formulation to catalyst C7a of EP 1 317 953 A1. This catalyst was compared with the catalysts C3 and C4 (for composition, see Table 3) which correspond in terms of their in-principle composition to the two embodiments according to Claims 4 and 5. In addition, a catalyst (C5) which corresponded to C3 but whose nitrogen oxide storage capacity at low temperatures was increased by means of an additional amount of Ce-Zr oxide was produced.

The results of the measurement of the storage efficiency of these catalysts after ageing are shown in Figure 5. The comparative catalyst after ageing displays significantly poorer efficiencies than the catalysts according to the invention over the entire working range.

**Table 3:** Composition of the catalysts

| Coating components | Support material [g/l] | Catalytically active components | | | |
|---|---|---|---|---|---|
| | | Platinum [g/l] | Palladium [g/l] | Rh [g/l] | BaO [g/l] |
| **Catalyst C1** | | | | | |
| Pt/CeO$_2$/Mg-Al oxide | 102.8 | 3.18 | | | |
| BaO/CeO$_2$/Mg-Al oxide | 126.3 | | | | 25.3 |
| **Catalyst C2** | | | | | |
| Pt/BaO/CeO$_2$/Mg-Al oxide | 102.8 | 3.18 | | | 25.3 |
| Ce-Zr oxide | 126.3 | | | | |
| **Comparative catalyst CC1** | | | | | |
| Pt/CeO$_2$/Mg-Al oxide | 102.8 | 3.18 | | | |
| BaO/Ce-Zr oxide | 126.3 | | | | 25.3 |
| **Catalyst C3** | | | | | |
| Pd[Pt/CeO$_2$/Mg-Al oxide] | 102.8 | 3.18 | 1.06 | | |
| BaO/CeO$_2$/Mg-Al oxide | 126.3 | | | | 25.3 |
| Rh/Al oxide | 10.0 | | | 0.35 | |
| **Comparative catalyst CC2** | | | | | |
| Pd[Pt/CeO$_2$/Mg-Al oxide] | 102.8 | 3.18 | 1.06 | | |
| BaO/(Mg-Al oxide+Ce-Zr oxide) | | | | | 25.3 |
| Rh/Al oxide | 10.0 | | | 0.35 | |

(continued)

| Coating components | Support material [g/l] | Catalytically active components | | | |
|---|---|---|---|---|---|
| | | Platinum [g/l] | Palladium [g/l] | Rh [g/l] | BaO [g/l] |
| **Comparative catalyst CC3** | | | | | |
| Pd[Pt/BaO/CeO$_2$/Mg-Al oxide] | 102.8 | 3.18 | 1.06 | | |
| BaO/(Mg-Al oxide + CeO$_2$) | | | | | 25.3 |
| Rh/Al oxide | 10.0 | | | 0.35 | |
| **Catalyst C4** | | | | | |
| Pd[Pt/BaO/CeO$_2$/Mg-Al oxide] | 102.8 | 3.18 | 1.06 | | 25.3 |
| Ce-Zr oxide | 126.3 | | | | |
| Rh/Al oxide | 10.0 | | | 0.35 | |
| **Catalyst C5** | | | | | |
| Pd[Pt/CeO$_2$/Mg-Al oxide] | 102.8 | 3.18 | 1.06 | | |
| BaO/CeO$_2$/Mg-Al oxide | 126.3 | | | | 25.3 |
| Ce-Zr oxide | 126.3 | | | | |
| Rh/Al oxide | 10.0 | | | 0.35 | |
| **Comparative catalyst CC4** | | | | | |
| Pt/CeO$_2$/Mg-Al oxide | 102.8 | 3.18 | 1.06 | | |
| BaO/Ce-Zr oxide | 126.3 | | | | 25.3 |
| Rh/Al oxide | 10.0 | | | 0.35 | |

**Claims**

1. Nitrogen oxide storage catalyst containing platinum as oxidation-active component and a nitrogen oxide storage material, comprising oxides, carbonates or hydroxides of barium on a homogeneous magnesium-aluminum mixed oxide doped with rare earth oxides as support material, with the magnesium-aluminum mixed oxide containing from 1 to 30% by weight of magnesium oxide, based on the total weight of the magnesium-aluminum mixed oxide and a homogeneous magnesium-aluminum mixed oxide doped with rare earth oxides likewise serves as support material for platinum, provided that if platinum is applied together with the storage component to the support material, an additional oxygen-storage component based on cerium is added to the storage catalyst.

2. Nitrogen oxide storage catalyst according to Claim 1, **characterized in that** platinum has been deposited on the nitrogen oxide storage material and the catalyst additionally contains an oxygen-storing material based on cerium oxide.

3. Nitrogen oxide storage catalyst according to Claim 1 or 2, **characterized in that** it additionally contains palladium.

4. Nitrogen oxide storage catalyst according to Claim 1 or 2, **characterized in that** it additionally contains rhodium on aluminum oxide.

5. Nitrogen oxide storage catalyst according to Claim 1, **characterized in that** the homogenous magnesium-aluminum mixed oxide which is doped with rare earth oxides and serves as support material for platinum contains from 1 to 30% by weight of magnesium oxide, based on the total weight of the magnesium-aluminum mixed oxide and from 5 to 15% by weight of rare earth oxides, based on the total weight of the support material.

6. Nitrogen oxide storage catalyst according to Claim 1, **characterized in that** the catalyst contains from 3 to 25% by weight of nitrogen oxide storage components, calculated as oxide and based on the total weight of the catalyst material.

7. Nitrogen oxide storage catalyst according to Claim 6, **characterized in that** the catalyst contains from 5 to 10% by weight of nitrogen oxide storage components, calculated as oxide and based on the total weight of the catalyst material.

8. Nitrogen oxide storage catalyst according to either Claim 1 or 2, **characterized in that** it has been applied in the form of a coating to an inert honeycomb made of ceramic or metal.


**Patentansprüche**

1. Stickoxidspeicherkatalysator, enthaltend Platin als oxidationsaktive Komponente und ein Stickoxid-Speichermaterial, umfassend Oxide, Carbonate oder Hydroxide von Barium auf einem homogenen, mit Seltenerdoxiden dotierten Magnesium-Aluminium-Mischoxid als Trägermaterial, wobei das Magnesium-Aluminium-Mischoxid von 1 bis 30 Gew.-% Magnesiumoxid enthält, bezogen auf das Gesamtgewicht des Magnesium-Aluminium-Mischoxids und ein homogenes, mit Seltenerdoxiden dotiertes Magnesium-Aluminium-Mischoxid ebenfalls als Trägermaterial für Platin dient, mit der Maßgabe, dass, wenn Platin zusammen mit der Speicherkomponente auf das Trägermaterial aufgebracht wird, dem Speicherkatalysator eine zusätzliche Sauerstoffspeicherkomponente auf Cerbasis zugesetzt wird.

2. Stickoxidspeicherkatalysator nach Anspruch 1, **dadurch gekennzeichnet, dass** Platin auf dem Stickoxidspeichermaterial abgeschieden ist und der Katalysator zusätzlich ein Sauerstoffspeichermaterial auf Ceroxidbasis enthält.

3. Stickoxidspeicherkatalysator nach Anspruch 1 oder 2, **dadurch gekennzeichnet, dass** er zusätzlich Palladium enthält.

4. Stickoxidspeicherkatalysator nach Anspruch 1 oder 2, **dadurch gekennzeichnet, dass** er zusätzlich Rhodium auf Aluminiumoxid enthält.

5. Stickoxidspeicherkatalysator nach Anspruch 1, **dadurch gekennzeichnet, dass** das homogene, mit Seltenerdoxiden dotierte Magnesium-Aluminium-Mischoxid, das als Trägermaterial für Platin dient, von 1 bis 30 Gew.-% Magnesiumoxid, bezogen auf das Gesamtgewicht des Magnesium-Aluminium-Mischoxids, und von 5 bis 15 Gew.-% Seltenerdoxide, bezogen auf das Gesamtgewicht des Trägermaterials, enthält.

6. Stickoxidspeicherkatalysator nach Anspruch 1, **dadurch gekennzeichnet, dass** der Katalysator von 3 bis 25 Gew.-% Stickoxid-Speicherkomponenten, berechnet als Oxid und bezogen auf das Gesamtgewicht des Katalysatormaterials, enthält.

7. Stickoxidspeicherkatalysator nach Anspruch 6, **dadurch gekennzeichnet, dass** der Katalysator von 5 bis 10 Gew.-% Stickoxid-Speicherkomponenten, berechnet als Oxid und bezogen auf das Gesamtgewicht des Katalysatormaterials, enthält.

8. Stickoxidspeicherkatalysator nach einem der Ansprüche 1 oder 2, **dadurch gekennzeichnet, dass** er in Form einer Beschichtung auf einem inerten Wabenkörper aus Keramik oder Metall aufgebracht ist.


**Revendications**

1. Catalyseur accumulateur d'oxyde d'azote contenant du platine en tant que composant actif d'oxydation et un matériau d'accumulation d'oxyde d'azote, comprenant des oxydes, carbonates ou hydroxydes de baryum sur un oxyde mixte de magnésium-aluminium homogène dopé avec des oxydes de terres rares en tant que matériau de support, avec l'oxyde mixte de magnésium-aluminium contenant de 1 à 30 % en poids d'oxyde de magnésium, sur la base du poids total de l'oxyde mixte de magnésium-aluminium et un oxyde mixte de magnésium-aluminium homogène dopé avec des oxydes de terres rares sert de façon similaire de matériau de support pour du platine, à condition que si du platine est appliqué conjointement avec le composant d'accumulation au matériau de support, un composant d'accumulation d'oxygène supplémentaire à base de cérium est ajouté au catalyseur accumulateur.

2. Catalyseur accumulateur d'oxyde d'azote selon la revendication 1, **caractérisé en ce que** du platine a été déposé sur le matériau d'accumulation d'oxyde d'azote et le catalyseur contient en outre un matériau d'accumulation d'oxygène à base d'oxyde de cérium.

3. Catalyseur accumulateur d'oxyde d'azote selon la revendication 1 ou 2, **caractérisé en ce qu'**il contient en outre du palladium.

4. Catalyseur accumulateur d'oxyde d'azote selon la revendication 1 ou 2, **caractérisé en ce qu'**il contient en outre du rhodium sur oxyde d'aluminium.

5. Catalyseur accumulateur d'oxyde d'azote selon la revendication 1, **caractérisé en ce que** l'oxyde mixte de magnésium-aluminium homogène qui est dopé avec des oxydes de terres rares et sert de matériau de support pour du platine contient de 1 à 30 % en poids d'oxyde de magnésium, sur la base du poids total de l'oxyde mixte de magnésium-aluminium et de 5 à 15 % en poids d'oxydes de terres rares, sur la base du poids total du matériau de support.

6. Catalyseur accumulateur d'oxyde d'azote selon la revendication 1, **caractérisé en ce que** le catalyseur contient de 3 à 25 % en poids de composants d'accumulation d'oxyde d'azote, calculés en tant qu'oxyde et sur la base du poids total du matériau catalyseur.

7. Catalyseur accumulateur d'oxyde d'azote selon la revendication 6, **caractérisé en ce que** le catalyseur contient de 5 à 10 % en poids de composants d'accumulation d'oxyde d'azote, calculés en tant qu'oxyde et sur la base du poids total du matériau catalyseur.

8. Catalyseur accumulateur d'oxyde d'azote selon la revendication 1 ou la revendication 2, **caractérisé en ce qu'**il a été appliqué sous la forme d'un revêtement à un nid d'abeilles inerte constitué de céramique ou de métal.

Figure 1

Figure 2

Figure 3

**Figure 4**

**Figure 5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1317953 A1
- US 6858193 B2
- DE 19813655 A1
- US 6338831 B1
- US 6217837 B1
- DE 19503522 A1